# EUROPEAN PATENT APPLICATION

(11) **EP 4 535 181 A1**
(43) Date of publication of application: **09.04.2025**
(21) Application number: 24195823.0
(22) Date of filing: 22.08.2024
(51) Int. Cl.: G06F 16/16

(54) **INFORMATION PROCESSING SYSTEM, PROGRAM, AND INFORMATION PROCESSING METHOD**

(30) Priority: 06.10.2023 JP 2023174268
(71) Applicant: FUJIFILM Business Innovation Corp., Minato-ku Tokyo (JP)
(72) Inventor: TODA, Yuki, Yokohama-shi, Kanagawa (JP)
(74) Representative: Kurig, Thomas

(57) **Abstract**

An information processing system includes a processor configured to: in a case where list display of a file and a folder stored in an identical hierarchy is executed, select a file that is representative of the folder as a representative file from among files stored in the folder; and display, along with the list display, attribute information on the selected representative file in association with the folder.

## Description

### BACKGROUND OF THE INVENTION

### (i) Field of the Invention

The present invention relates to an information processing system, a program, and an information processing method.

### (ii) Description of Related Art

As represented by Windows (registered trademark) Explorer (registered trademark), there is a system for managing files, such as documents owned by a user, through a hierarchical structure of the folder. In such a system, in addition to displaying of a name of the file stored in the folder or a name of a folder in a lower-hierarchy, an attribute value of an attribute desired by the user can be displayed in association with the file name or folder name.

Meanwhile, one or a plurality of files are generally stored in the folder, but in the operation of the system, file management is often executed by creating a folder in accordance with an intended use, a purpose, or the like, and classifying and storing the files in the corresponding folder. In this case, it is common to create a folder with a name in accordance with the intended use, the purpose, or the like.

### SUMMARY OF THE INVENTION

However, the user cannot always recognize the intended use, the purpose, or the like of the folder only from the folder name. In this case, the intended use, the purpose, or the like of the folder may be recognizable by opening the folder by selecting the folder once, and confirming the file name or the like stored in the folder.

An object of the present invention is to enable recognition of a file stored in a folder along with a file in an identical hierarchy to the folder without opening the folder.

According to an aspect of the present disclosure, there is provided an information processing system including: a processor configured to: in a case where list display of a file and a folder stored in an identical hierarchy is executed, select a file that is representative of the folder as a representative file from among files stored in the folder; and display, along with the list display, attribute information on the selected representative file in association with the folder.

A display element indicating whether or not the file may be the representative file is associated with the files stored in the folder, and the processor may be configured to: switch the representative file in response to a user operation with respect to the display element.

The processor may be configured to: in a case where processing in which display details of the list display are subject to change is executed by referring to attribute information on the file and the folder that are list-displayed, refer to the attribute information on the representative file of the folder in addition to the attribute information on the folder or instead of the attribute information on the folder.

The processor may be configured to: in a case where the processing in which the display details of the list display are subject to change is processing of extracting a folder that meets a predetermined extraction condition and displaying the folder, and at least one of attribute information on the folder or attribute information on a representative file of the folder meets the extraction condition, display the folder and the representative file of the folder as a pair.

The processor may be configured to: in a case where attribute information on the folder and the attribute information on the representative file of the folder are different, update one attribute information so that both the attribute information on the folder and the attribute information on the representative file of the folder match each other.

The processor may be configured to: update attribute information on one or a plurality of files included in the folder to match the attribute information on the folder.

The processor may be configured to: update the attribute information on the folder to match the attribute information on the representative file.

The processor may be configured to: prompt a user to select attribute information that is a match target.

The processor may be configured to: in a case where selection of the file in the list display is received, display details of the file; and in a case where the attribute information on the representative file displayed along with the folder or the list display is selected, display details of the representative file of the folder.

According to another aspect of the present disclosure, there is provided a program for causing a computer to realize: a function of, in a case where list display of a file and a folder stored in an identical hierarchy is executed, selecting a file that is representative of the folder as a representative file from among files stored in the folder; and a function of displaying, along with the list display, attribute information on the selected representative file in association with the folder.

According to still another aspect of the present disclosure, there is provided an information processing method including: selecting, in a case where list display of a file and a folder stored in an identical hierarchy is executed, a file that is representative of the folder as a representative file from among files stored in the folder; and displaying, along with the list display, attribute information on the selected representative file in association with the folder.

According to the first aspect of the present disclosure, the file stored in the folder may be recognized along with the file in the identical hierarchy to the folder without opening the folder.

According to the second aspect of the present disclosure, the representative file may be selected by the user.

According to the third aspect of the present disclosure, the display details of the list display may be changed by referring to the attribute information on the representative file.

According to the fourth aspect of the present disclosure, the folder and the representative file may be displayed while maintaining a relationship between the folder and the representative file.

According to the fifth aspect of the present disclosure, the attribute information on the folder and the attribute information on the representative file may be made to match.

According to the sixth aspect of the present disclosure, the information on the file stored in the folder may be made to match the attribute information on the folder.

According to the seventh aspect of the present disclosure, the attribute information on the representative file may be reflected in the attribute information on the folder.

According to the eighth aspect of the present disclosure, only the desired attribute information may be made to be the match target.

According to the ninth aspect of the present disclosure, the representative file may be used as a display target instead of the folder.

According to the tenth aspect of the present disclosure, the file stored in the folder may be recognized along with the file in the identical hierarchy to the folder without opening the folder.

According to the eleventh aspect of the present disclosure, the file stored in the folder may be recognized along with the file in the identical hierarchy to the folder without opening the folder.

### BRIEF DESCRIPTION OF THE DRAWINGS

Exemplary embodiment(s) of the present invention will be described in detail based on the following figures, wherein:
Fig. 1 is a block configuration diagram showing an information processing apparatus in the present exemplary embodiment;
Fig. 2 is a diagram showing an example of display in a case where a file and a folder, which are stored in a folder, are list-displayed;
Fig. 3 is a diagram showing an example of display in a case where the file and the folder, which are stored in the folder, are list-displayed using characteristic display control according to the present exemplary embodiment;
Fig. 4 is a diagram showing an example of a data configuration of a folder management table according to the present exemplary embodiment;
Fig. 5 is a diagram showing an example of display in a case where files stored in a folder in which a representative file is selected, are list-displayed in the present exemplary embodiment;
Fig. 6 is a diagram showing an example of a data configuration of a folder management table of the folder in which the representative file is selected in the present exemplary embodiment;
Fig. 7 is a diagram showing an example of screen display including the list display shown in Fig. 3;
Fig. 8 is a diagram showing an example of screen display showing an execution result of filtering processing according to the present exemplary embodiment;
Fig. 9 is a flowchart showing the filtering processing according to the present exemplary embodiment;
Fig. 10 is a diagram showing an example of screen display showing an execution result of sorting processing according to the present exemplary embodiment;
A part (a) in Fig. 11 is a diagram showing an example of display before attribute information update processing is executed, and a part (b) in Fig. 11 is a diagram showing an example of display after the attribute information update processing is executed;
Fig. 12 is a flowchart showing the attribute information update processing according to the present exemplary embodiment; and
Fig. 13 is a diagram showing an example of screen display of details of the representative file in the present exemplary embodiment.

### DETAILED DESCRIPTION OF THE INVENTION

Hereinafter, an exemplary embodiment of the present invention will be described with reference to the drawings.

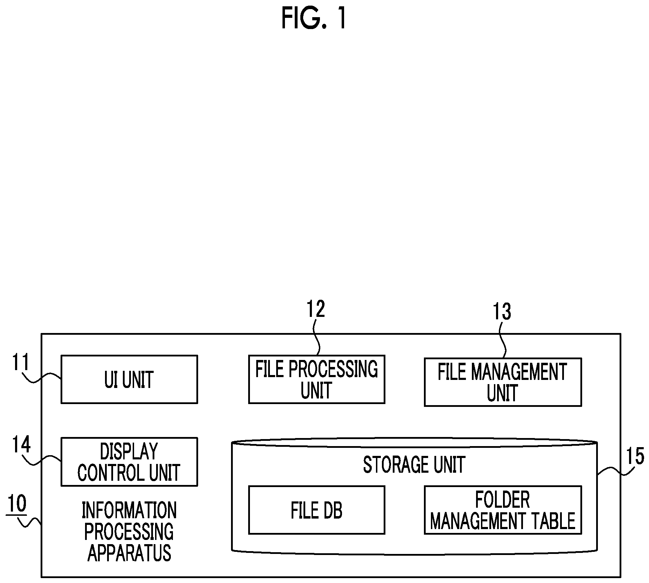

Fig. 1 is a block configuration diagram showing an information processing apparatus 10 according to the present exemplary embodiment. The information processing apparatus 10 according to the present exemplary embodiment can be realized by an existing general-purpose hardware configuration such as a personal computer (PC). That is, the information processing apparatus 10 includes a CPU, a ROM, a RAM, a hard disk drive (HDD) as a storage section, a network interface (IF) as a communication section, and a user interface including an input section, such as a mouse and a keyboard, and a display section, such as a display.

The information processing apparatus 10 according to the present exemplary embodiment includes a user interface (UI) unit 11, a file processing unit 12, a file management unit 13, a display control unit 14, and a storage unit 15. In addition, components that are not used for the description of the present exemplary embodiment are not shown in the drawings.

The user interface unit 11 displays information on the display section and receives input from the input section. The file processing unit 12 executes processing on files, such as search for the files or sorting the files. The file management unit 13 executes file management including registration and deletion of the files handled by the information processing apparatus 10, setting of attribute information on the files, or the like. The display control unit 14 controls the display on the display section.

The storage unit 15 stores the files or information on the files. In the present exemplary embodiment, a file database (DB) and a folder management table are stored. In the present exemplary embodiment, the files are classified and saved in the folder in accordance with an intended use or a purpose, and the file database accumulates a hierarchical structure of the folder, data serving as a substance of the file, and the attribute information. The information processing apparatus 10 according to the present exemplary embodiment is described using the files or the folders saved in the file database as display targets, but the present invention is not limited to this, and the files or the folders held in a cloud via the Internet may also be used as the display targets. The same applies to the folder management table, and it is not always necessary to hold the folder management table in the information processing apparatus 10. The detailed description of a data configuration or the like of the folder management table will be made below.

Each of the components 11 to 14 of the information processing apparatus 10 is realized by a cooperative operation of a computer that constitutes the information processing apparatus 10 and a program that is operated by the CPU provided in the computer. The storage unit 15 is realized by the HDD mounted in the information processing apparatus 10. Alternatively, the RAM or an external storage section may be used via a network.

Further, the program used in the present exemplary embodiment can be provided not only by the communication section but also by being stored in a computer-readable recording medium such as a CD-ROM or a USB memory. The program provided from the communication section or the recording medium are installed in the computer, and the CPU of the computer sequentially executes the program to realize various types of processing.

The "information processing system" according to the present exemplary embodiment is described as being configured by a single information processing apparatus 10 as an example, but may be configured by a plurality of information processing apparatuses.

Next, an operation of the present exemplary embodiment will be described. In the present exemplary embodiment, since the display of the details stored in the folder is characteristic, the description will be made using a screen display example.

### <Details of List Display>

In general, a user often uses functions provided by a file management application to form the folders hierarchically in accordance with the intended use, the purpose, or the like, store the files in appropriate folders, and manage the files. In the folder, the files as well as other folders may be stored.

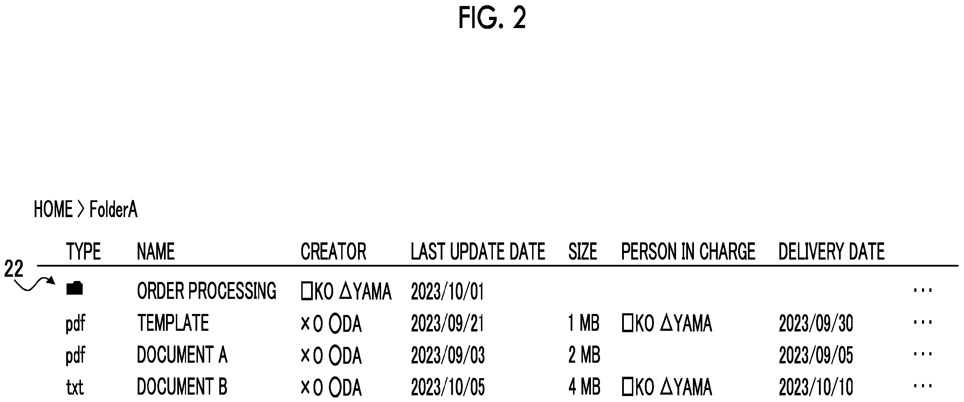

Fig. 2 is a diagram showing an example of display in a case where files and a folder, which are stored in a folder named "FolderA", are list-displayed in the present exemplary embodiment. In the following description, the files and the folder stored in the folder may be collectively referred to as "content".

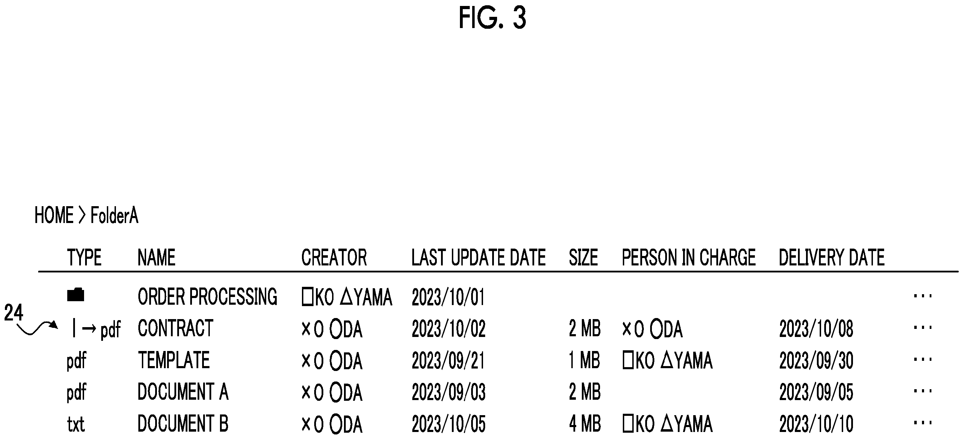

Fig. 2 shows details that can be displayed using the existing technology and is not particularly characteristic. However, Fig. 2 is shown to facilitate comparison with characteristic display in the present exemplary embodiment, which will be described with reference to Fig. 3. In the display example shown in Fig. 2, for the content that is the display target, as the attribute information on the content, "type", "name", "creator", "last update date", "size", "person in charge", and "delivery date" are shown. It goes without saying that the attribute items that are the display targets are not limited to the items shown in Fig. 2, and can be appropriately added or deleted by the user, and the arrangement of the attribute items can be further appropriately changed. However, in the present exemplary embodiment, "type" and "name" are always the display targets. In the "type", a file type is displayed in a case where the content is the file, and an image 22 in a shape indicating the folder is displayed in a case where the content is the folder. It goes without saying that the display example is not limited to the display example shown in Fig. 2 as long as, for example, the display can be executed in a manner that prompts the user to discriminate the type of content (that is, the file or the folder) by executing display in another image or by leaving the "type" blank. The other attribute items shown in Fig. 2 are not particularly displayed in a characteristic display form, and the details of the attribute items can be determined from the attribute item names, so that the description thereof will be omitted. The attribute item for which an item value cannot be acquired or is not set, such as the size of the folder "order processing", is displayed as a blank.

Fig. 3 is a diagram showing an example of display in a case where the files and the folder, which are stored in the folder named "FolderA", are list-displayed, as in Fig. 2. However, Fig. 3 shows a case where the display is executed using characteristic display control according to the present exemplary embodiment. As is clear from the comparison between Fig. 2 and Fig. 3, a file named "contract" is additionally displayed. The display example shown in Fig. 2 is a display example that can be displayed in the related art, but it can also be said that the display example shown in Fig. 2 is a display example in a state where the representative file is not selected (in other words, a state before the representative file is selected) or in a state where the representative file is not explicitly displayed. In addition, the display control may be executed such that the display of Fig. 2 and the display of Fig. 3 can be switched in response to a predetermined user operation.

The file named "contract" shown in Fig. 3 is one of the files included in the folder named "order processing" that is displayed immediately before in the list display. Although a plurality of files may be stored in the folder "order processing", the display control unit 14 according to the present exemplary embodiment selects a file that is representative of the folder from among the plurality of files as a representative file and executes display control of displaying the attribute information on the selected representative file in association with the folder (in Fig. 3, immediately after the folder) along with the list display. That is, the file "contract" corresponds to the representative file of the folder "order processing". Fig. 3 is a display example in a case where the display is performed by including the representative file in the list display of the content stored in "FolderA". On the other hand, the attribute information on the files that are not selected as the representative file among the files stored in the folder "order processing" is not displayed along with the list display of the content stored in "FolderA".

In the attribute information "type" of the file "contract", a symbol 24 indicating the representative file, such as "1----+", is added and displayed along with the type "pdf" of the file. It goes without saying that the display example is not limited to the display example shown in Fig. 3 as long as the user can recognize that the file included in the list display is the representative file of the folder "order processing".

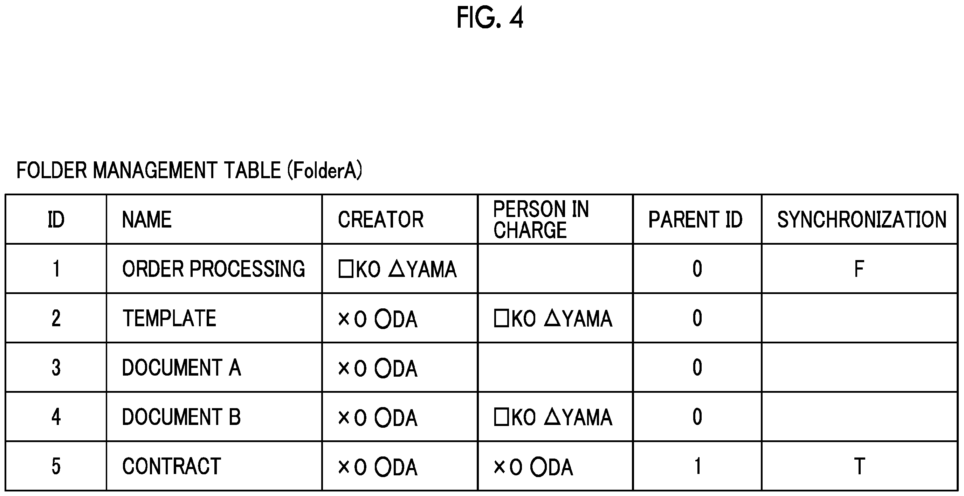

Fig. 4 is a diagram showing an example of the data configuration of the folder management table according to the present exemplary embodiment. The folder management table shown in Fig. 4 corresponds to the display example shown in Fig. 3. That is, the folder management table shown in Fig. 4 is a folder management table corresponding to the folder "FolderA". In the folder management table, the respective items "ID", "name", "creator", "person in charge", "parent ID", and "synchronization" are set. The "ID" is identification information used for identifying each content. The "name" is a content name. The "creator" is a person who has created the content. The "person in charge" is a person who executes processing on the content. In the "parent ID", "0" is set for the content included in the folder "FolderA", and " 1" is set for the content (that is, the representative file) stored in the folder of the parent ID "0". The "synchronization" is an item referred to in processing described below and indicates a direction in which the attribute information is reflected, in accordance with the item value. The detailed description will be made below.

The file management unit 13 acquires the attribute information on the content that is the display target by referring to the folder management table. In addition, even in a case where information is not set in the folder management table, for example, the information may be acquired from the content, such as "last update date" or "size", and displayed as the attribute information. The "last update date" or the "size" is information acquired from the properties of the content, but information obtained by analyzing (for example, executing optical character recognition/reader (OCR) on) the details of the content may also be displayed as the attribute information. Then, as shown in Fig. 3, the display control unit 14 displays the attribute information on each content on the user interface unit 11 in accordance with a preset arrangement order of the attribute information.

In the present exemplary embodiment, in the display example shown in Fig. 3, the representative file is displayed to be included in the list display (for example, the attribute of the file stored in the folder "FolderA" and the attribute of the representative file are displayed in the identical column for each attribute item), similarly to the content stored in the folder "FolderA". However, it is not always necessary to include the representative file in the list display as long as the representative file is displayed to be recognizable as the representative file of the folder "order processing". For example, the display may be executed as a pop-up screen (not shown) along with the list display shown in Fig. 2. The pop-up screen displays the attribute information on the representative file and the identification information (for example, the name) of the corresponding folder. Alternatively, the attribute information on the representative file may be displayed as the pop-up screen or the like by placing a cursor on a display line of the folder in the list display. In addition, it is sufficient that a part of the information on the representative file can be understood, and it is not always necessary for all the attribute information to be displayed.

Subsequently, a method of selecting the representative file will be described.

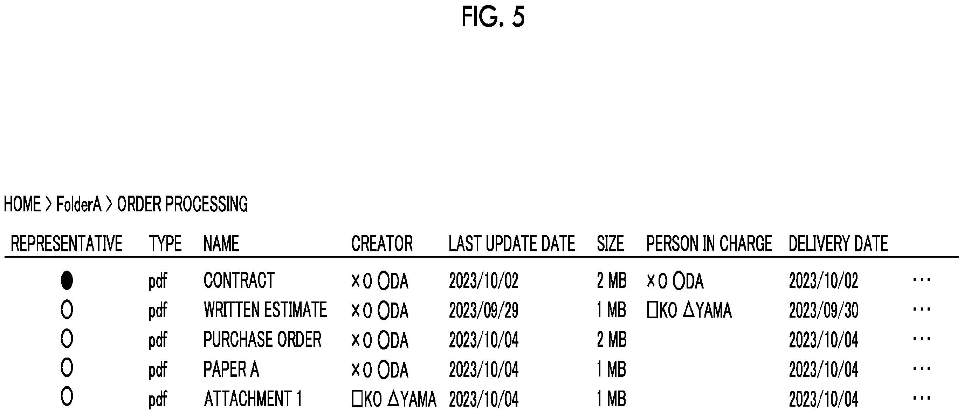

Fig. 5 is a diagram showing an example of display in a case where the content stored in the folder "order processing" is list-displayed in the present exemplary embodiment. The display example shown in Fig. 5 is a display example in a case where the content stored in the folder is list-displayed, as in the display examples shown in Figs. 2 and 3, and the displayed attribute information is basically the same as the attribute information in Figs. 2 and 3. However, the attribute item of "representative" is added to the folders other than the topmost hierarchy. The "representative" is information indicating the file that is the representative file, and in the present exemplary embodiment, a radio button is displayed in association with each file as a display element indicating whether or not the file is the representative file. As shown in Fig. 5, only the file "contract" selected as the representative file is represented by a black circle instead of a white circle, and thus it can be seen that the file "contract" is selected as the representative file. In a case where the user wants to change the representative file, the user can change the representative file of the folder "order processing" by executing an operation of selecting the radio button corresponding to a change destination file. In a case where the representative file is changed, the file management unit 13 updates details of the setting of the file "contract" included in the folder management table shown in Fig. 4. In accordance with this, the display example shown in Fig. 3 is also updated from the file "contract" to the change destination file.

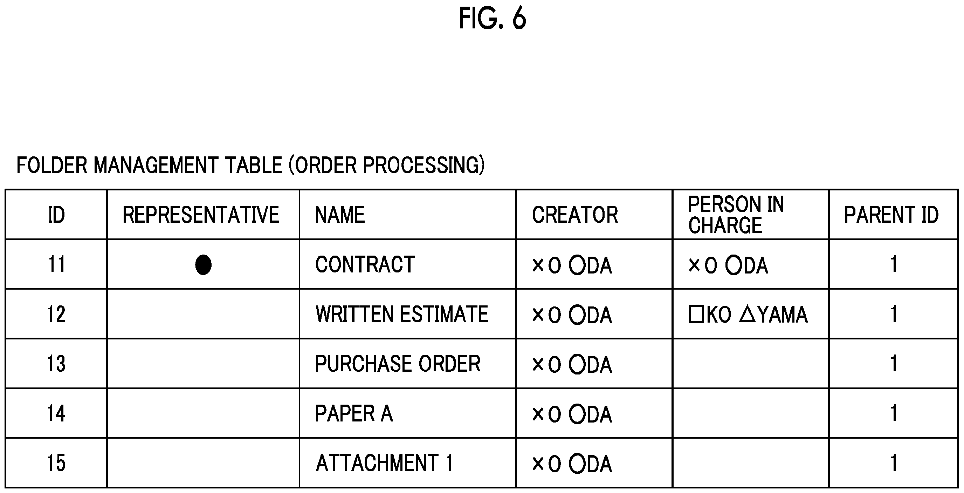

Fig. 6 is a diagram showing an example of the data configuration of the folder management table of the folder in which the representative file is selected in the present exemplary embodiment. The folder management table shown in Fig. 6 corresponds to the display example shown in Fig. 5. That is, the folder management table shown in Fig. 6 is a folder management table corresponding to the folder "order processing". In the folder management table, the respective items "ID", "representative", "name", "creator", "person in charge", and "parent ID" are set. The "ID" is identification information used for identifying each content. The "representative" is an item indicating whether or not the file is the representative file, and as shown in the representative file "contract", an attribute value "•" is set. The setting of the attribute value to the "representative" is not limited to the attribute value "•" shown in Fig. 6 as long as it can be understood that one file is the representative file. The "name" is a content name. The "creator" is a person who has created the content. The "person in charge" is a person who executes processing on the content. In the "parent ID", an ID of the parent of the content is set. For example, as shown in Fig. 6, an ID "1" of the folder "order processing" is set for the content included in the folder "order processing". In a case where a folder having an ID of "16" in the lower hierarchy exists in the folder "order processing" and the representative file is set for the folder, "16" is set for the "parent ID" of the representative file. Meanwhile, there are various methods for initial setting of the representative file. For example, the representative file may be set only after being explicitly designated by the user. Alternatively, the setting may be automatically executed in the following manner.

For example, after the folder is created, a file first stored in the folder may be set as the representative file. Alternatively, in a case where the folder is created to simultaneously store a plurality of files, a file first selected by the user as a storage target may be set as the representative file. Alternatively, a most recently stored file may be set as the representative file for the folder.

In a case where the file and the folder (here, referred to as a "sub-folder") in the identical hierarchy, which are stored in the folder (here, referred to as a "parent folder"), are list-displayed, normally, only the file and the sub-folder, which are stored in the parent folder, are displayed as the display targets. However, in the present exemplary embodiment, the representative file of the sub-folder among the files stored in the sub-folder is displayed as the display target along with the list display. In the display example shown in Fig. 3, a case is shown in which only one sub-folder is stored in the parent folder, but the present invention can also be applied to a case where a plurality of sub-folders are stored, and it is sufficient that the representative file is displayed for each sub-folder.

In addition, since the representative file is representative of the sub-folder, it is assumed that only one file is selected as the representative file, but this assumption is not intended to deny the selection of a plurality of representative files.

### <Editing of Details of List Display>

In the above description, the basic display method in the folder according to the present exemplary embodiment has been described. Hereinafter, a case will be described in which the details of the list display are changed with the content in the folder as a processing target. Here, a case will be described in which the details of the list display are changed by executing processing in which the display details of the list display are subject to change. Examples of the "processing in which the display details of the list display are subject to change" include filtering, search, and sorting (re-arrangement).

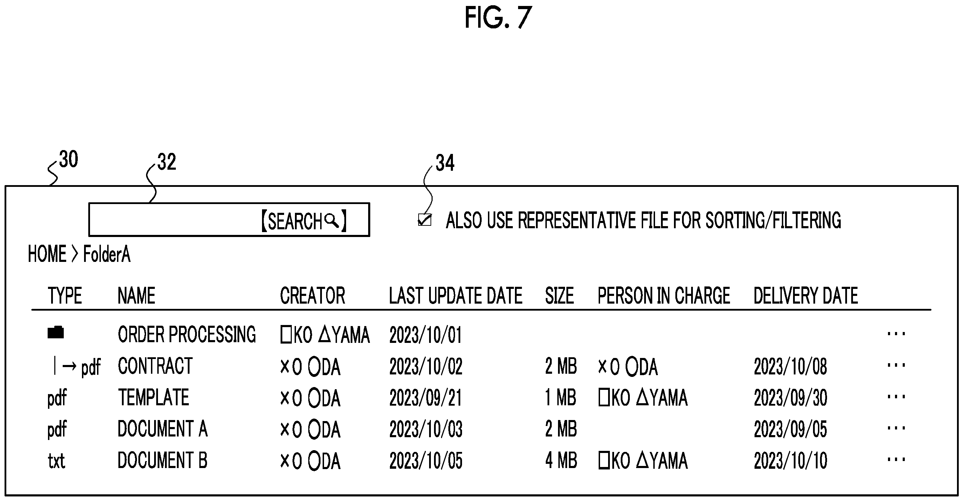

Fig. 7 is a diagram showing a screen display example displayed on a screen 30 of the display of the information processing apparatus 10, and shows a display example in a case where the list display shown in Fig. 3 is displayed. In addition to the details of the list display, a search input field 32 is displayed on the screen 30, and filtering or search can be executed by inputting a search word into the search input field 32. The "filtering" is processing of executing the search using a displayed range, that is, the details of the list display shown in Fig. 7, as a search range. On the other hand, the "search" is processing of executing the search using a range including a lower-hierarchy folder from the list display as the search range.

In addition, a check box 34 is a check box for designating whether or not to use the information on the representative file as a condition in a case where the filtering, the search, the sorting, or the like is executed. As shown in Fig. 7, a case where the check box 34 is checked indicates that the information on the representative file is used as a condition in a case where the filtering, the search, the sorting, or the like is executed.

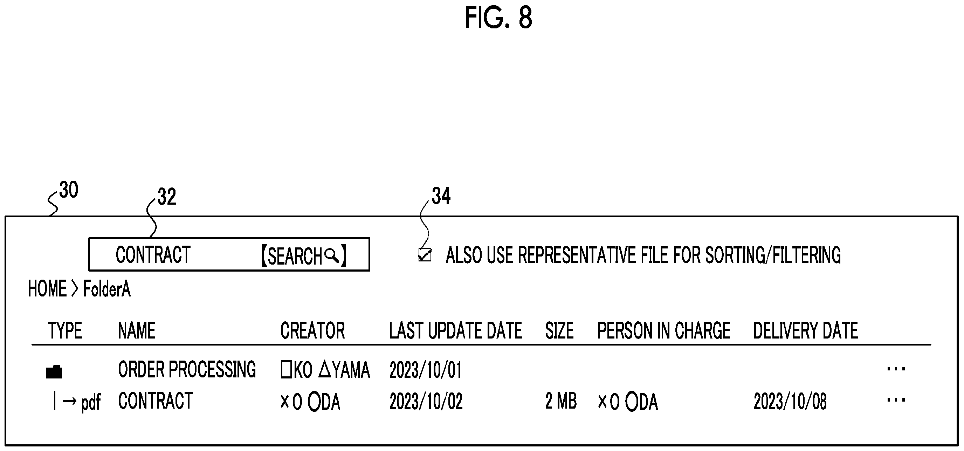

Here, as shown in Fig. 8, it is assumed that the user checks the check box 34 and issues an instruction to execute the filtering by using the search word "contract" as a predetermined extraction condition ("filtering condition" described above) (that is, by inputting "contract" in the search input field 32). The "filtering" according to the present exemplary embodiment corresponds to processing of extracting the file or the folder that meets the filtering condition from among the list display and displaying the file or the folder. Since the check box 34 is checked, in a case where at least one of the attribute information on the folder or the attribute information on the representative file of the folder meets the filtering condition, the folder and the representative file of the folder are displayed as a pair.

Therefore, the file processing unit 12 refers to the attribute information included in the list display including the representative file, and searches for the content that matches the search word using the attribute information as the search range. In the display example shown in Fig. 7, the attribute information on the folder "order processing" included in the list display is as follows: name: order processing, creator: oko Δyama, last update date: 2023/10/01, and size, person in charge, and delivery date: blank, and none of the attribute information meets the filtering condition. On the other hand, the name in the attribute information on the representative file "contract" of the folder "order processing" meets the filtering condition. In addition, the attribute information on the other types of the content included in the list display (that is, the files stored in the folder "FolderA") does not meet the filtering condition.

As described above, since the representative file of the folder "order processing" meets the filtering condition, the display control unit 14 displays, as shown in Fig. 8, the representative file "contract" and the folder "order processing" that stores the representative file as a pair from the execution result of the filtering processing, and does not display the other files or the like that do not meet the filtering condition. However, in a case where the folder set with the representative file is displayed as a result of the filtering or the like, only the folder or only the representative file may be displayed instead of displaying the representative file and the folder as a pair.

In the present exemplary embodiment, by checking the check box 34 for the representative file, the attribute information on the representative file is also referred to as the search range in addition to the attribute information on the folder. However, the attribute information on the representative file may be referred to as the search range instead of the attribute information on the folder. The same applies to the sorting processing described below. In addition, in a case where the search is executed instead of the filtering, the processing of the search is the same as the filtering, except that a search target is not limited to the items in the list display.

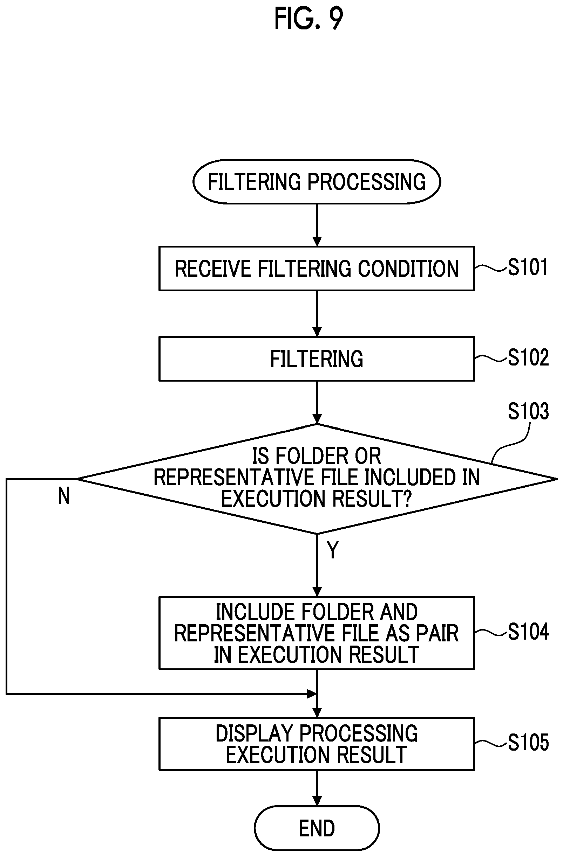

Fig. 9 shows a flowchart of the filtering processing. The description will be made from a state where the list display is displayed on the screen 30 as shown in Fig. 7. In a case where the user interface unit 11 receives the search word designated by the user and whether or not the check box 34 is checked, as the filtering conditions (step S101), the file processing unit 12 that executes the filtering processing executes the filtering including the representative file using the search word as the filtering condition (step S102).

Here, in a case where at least one of the folder or the representative file of the folder is included in the execution result of the filtering (Y in step S103), the pair of the folder and the representative file is included in the execution result (step S104). In a case where neither the folder nor the representative file of the folder is included in the execution result (N in step S 103), it is not necessary to form the above-described pair. Then, as shown in Fig. 8, the display control unit 14 displays the execution result of the filtering processing (step S105).

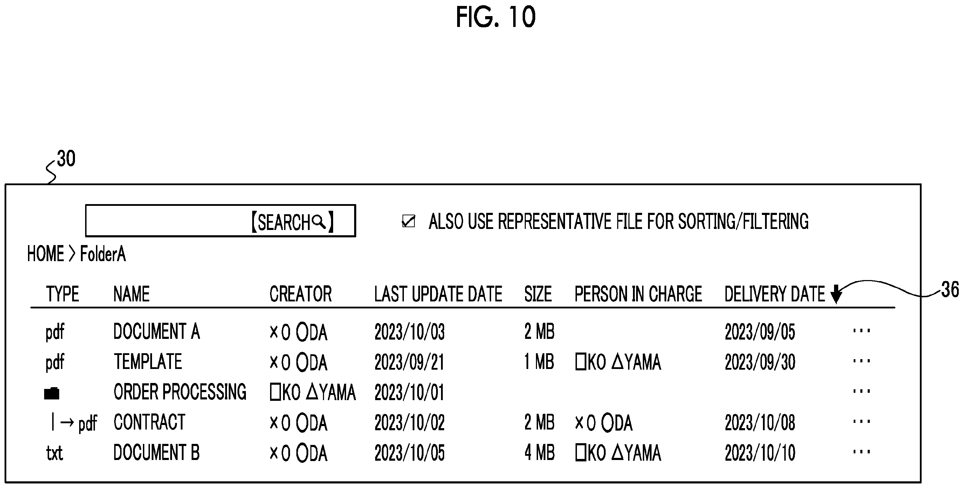

Next, Fig. 10 shows a result of the sorting (re-arrangement) executed by designating, as a sorting key, the attribute item "delivery date" via a predetermined operation performed by the user from the display details shown in Fig. 7. The user can confirm that the "delivery date" is selected as the sorting key by a predetermined selection operation, and the designation of ascending or descending order by the addition of the symbol 36 and the direction of the arrow. In a case of the sorting, the folder and the representative file are basically handled as a pair. In a case where the attribute values (in this example, the delivery date) are different, the arrangement order of the display is determined by prioritizing the attribute value to be displayed at the top. For example, in the example of Fig. 10, since the delivery date of the file "contract" is 2023/10/08, and the delivery date of the folder "order processing" is blank, the result is as shown in Fig. 10 due to including the information of the representative file in a sorting condition. On the other hand, even in a case where the delivery date of the folder "order processing" is not blank and is, for example, 2023/10/15, as described above, in a case where the attribute values (in this example, the delivery date) are different, the arrangement order of the display is determined by prioritizing the attribute value to be displayed at the top, and thus the result is as shown in Fig. 10 rather than the bottom.

### <Change of Attribute Information>

The user or an administrator of the file may want to match the attribute of the folder with the attribute of the representative file. For example, in a case where the attribute information on the representative file is crucial, the attribute information on the representative file is used as the attribute information on the folder. In addition, in a case where the attribute information on the folder is expanded to each file in the folder to make the attribute information identical, the attribute information to be made identical may be first set for the folder and then expanded to each file.

As described above, in the present exemplary embodiment, in a state where the attribute information on the folder and the attribute information on the representative file of the folder are different, one attribute information can be updated so that both the attribute information on the folder and the attribute information on the representative file of the folder match each other.

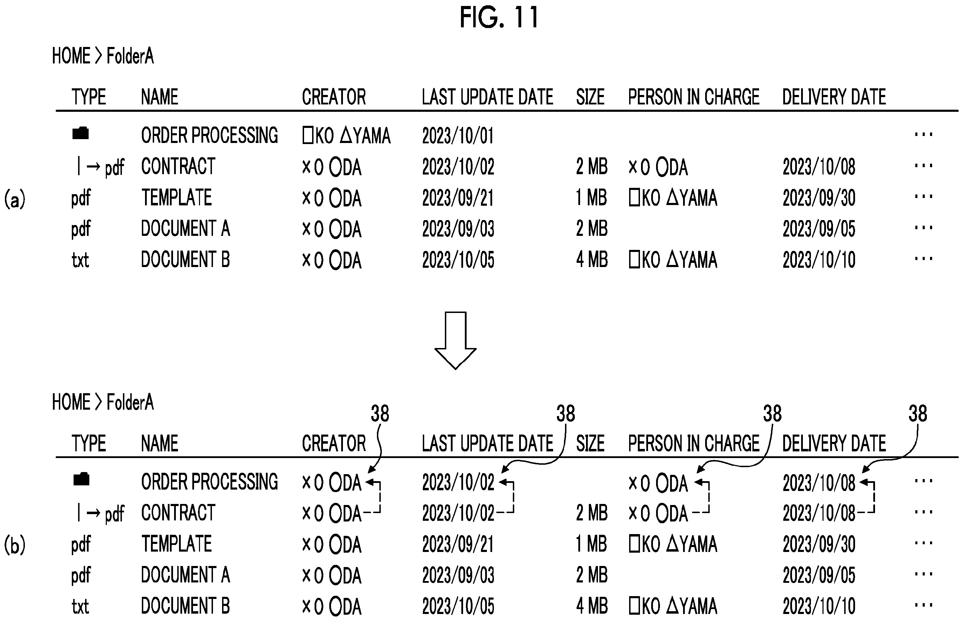

A part (a) in Fig. 11 is the identical display example to Fig. 3. A part (b) in Fig. 11 shows a display example in a case where the attribute information on the representative file is updated by reflecting the attribute information on the representative file in the attribute information on the folder in a batch and automatically. As is clear from the comparison between a part (a) in Fig. 11 and a part (b) in Fig. 11, the attribute information on the folder is overwritten and updated with the attribute information on the representative file, such as "creator", "last update date", "person in charge", and "delivery date" of the representative file indicated by a broken line arrow 38.

The attribute information is updated based on the setting of "synchronization" in the folder management table shown in Fig. 4. That is, since "T" is set for the representative file and "F" is set for the folder, the file management unit 13 updates the attribute information on the folder with the attribute information on the representative file as shown in a part (b) in Fig. 11 in accordance with this setting.

There are the attribute items that identify the content, such as "type" and "name", and the attribute items that do not indicate correct information on the attribute value in a case of being updated, such as "size". For the attribute item that should not be updated in this way, the attribute item may be set to be excluded from the update target such that the attribute item is not used as the update target.

Fig. 11 shows a case where the attribute information on the folder is updated to match the attribute information on the representative file as described above, but the attribute information on the representative file may be updated to match the attribute information on the folder.

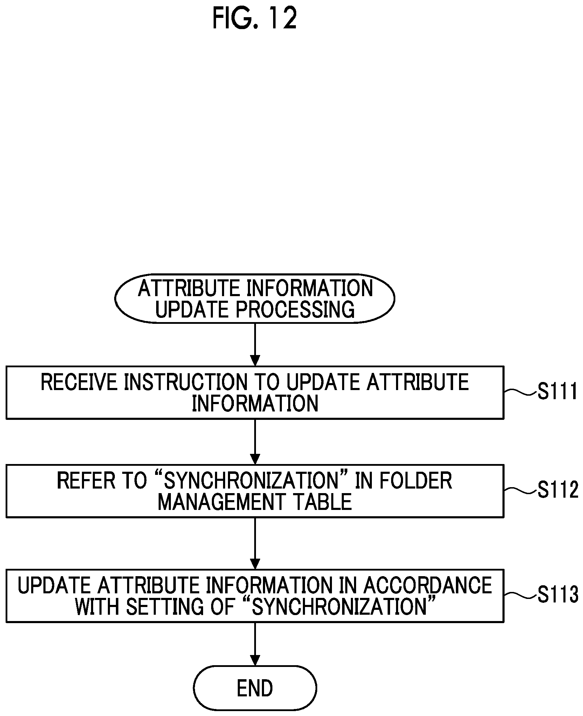

Fig. 12 shows a flowchart of attribute information update processing. The description will be made from a state where the list display is executed on the screen as shown in a part (a) in Fig. 11. In a case where the user interface unit 11 receives the update instruction from the user (step S111), the file processing unit 12 that executes the attribute information update processing refers to the setting of "synchronization" in the folder management table corresponding to the folder that is the list display target (step S112). Then, the file processing unit 12 confirms the update direction by the setting of "synchronization" and updates the attribute information (step S113).

Meanwhile, Fig. 11 shows an example in which all attribute information is automatically updated as the update target in accordance with the setting of "synchronization" in the folder management table in response to the user operation, but the user may be prompted to select the attribute information that is the update target. For example, the user may be able to set whether or not each attribute item is used as the update target, such as setting the item "creator" as a match target and setting the item "person in charge" as a non-match target. In addition, the direction of the update may be settable for each attribute item instead of being set in common for all of the attribute items as in the "synchronization" shown in Fig. 4. Further, the display of the updated attribute item and the display of the non-updated attribute item may be distinguishable from each other. For example, the attribute item in the attribute information on the folder, which is updated with the attribute of the representative file, is highlighted, the color of the text indicating the attribute is changed, a background color of a portion in which the attribute is displayed is changed, or a statement indicating that the attribute is updated is additionally displayed, while the attribute item of the attribute information on the folder, which remains as the original attribute information on the folder, is displayed in an original state.

The setting for updating the attribute information is set by the user from a predetermined setting screen (not shown). Alternatively, for example, a user interface may be used in which the setting can be made by displaying a setting screen (for example, a pull-down menu) for the attribute item by right-clicking the list-displayed attribute items. The file management unit 13 saves the details of the setting made by the user in the storage unit 15 or the like.

As described above, various settings can be executed for the update of the attribute information.

In summary, the user can designate the direction of the update of the attribute information, that is, from the folder to the representative file or from the representative file to the folder. In addition, the direction of the update may be preset in the "synchronization" in the folder management table, and the update of the attribute information may be automatically executed in response to the user operation. Alternatively, the user may be prompted to select the folder or the representative file that is the update source from the list display each time.

In addition, the file to be updated with the attribute information on the folder need not be limited to the representative file. For example, in a case where the folder that is the update source is selected by the user, the files stored in the folder may be list-displayed, and one or a plurality of files that are the update targets based on the attribute information on the folder may be selected by the user from among the files. In addition, the user may be able to select the attribute items that is an update target. In this case, as described above, the display of the updated attribute items and the display of the non-updated attribute items may be distinguishable from each other.

### <Display of Details of File>

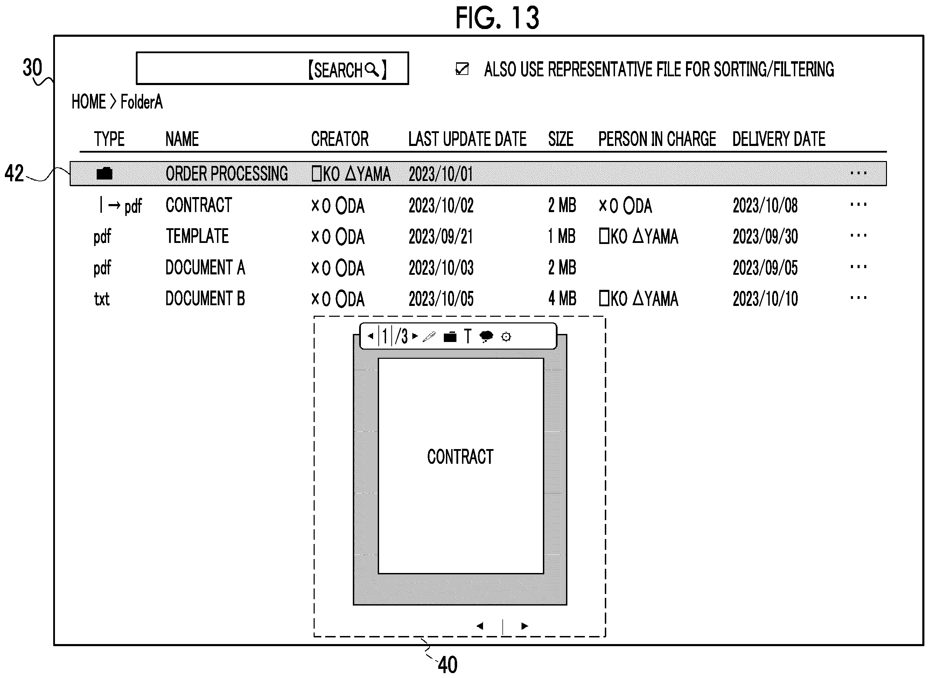

Fig. 13 is a diagram showing an example of screen display of the details of the representative file in the present exemplary embodiment. Although the details of a certain folder (here, "FolderA") are list-displayed on the screen 30 of the display of the information processing apparatus 10, in Fig. 13, a display region 40 for displaying the details of the file is further provided.

For example, in a case where the user selects any file from among the list-displayed files, the user interface unit 11 receives the selection of the file. The display control unit 14 reads out the details of the selected file from the storage unit 15 and displays the details in the display region 40. Although the display depends on the size of the display region 40, the display of the details of the file according to the present exemplary embodiment includes displaying a thumbnail, displaying the thumbnail in an enlarged manner, and displaying the details of the document itself instead of the thumbnail. For example, in a case where the file (for example, a file "template", a file "document A", or a file "document B") in the list display is selected, the details of the file are displayed. In addition, the representative file "contract" may also be selectable in the same manner as these files, and in such a case, the details of the "contract" are displayed in a case where the "contract" is selected.

Here, in Fig. 13, it is assumed that the folder "order processing" is selected from the list display. In Fig. 13, the selection is indicated by grayscale 42. The selection is not limited to the name of the folder, and any attribute information on the folder included in the grayscale 42 may be selected. In the present exemplary embodiment, in a case where the folder is selected from the list display instead of the file, the display control unit 14 displays the details of the representative file of the folder in the display region 40. In addition, even in a case where the attribute information on the representative file displayed along with the list display is directly selected, the display control unit 14 displays the details of the representative file in the display region 40.

The file to be selected may be switched with the individual selection of the file via the operation performed by the user using the mouse or the like, or the document to be selected may be switched by receiving the selection of the arrow (displayed below the display region 40 in Fig. 13) included in the display region 40 or the like. Naturally, the details of the file displayed in the display region 40 is changed with the switching of these files (that is, the switching of the selected file).

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### (Supplementary Note)

(((1))) An information processing system comprising:
   a processor configured to:
   in a case where list display of a file and a folder stored in an identical hierarchy is executed, select a file that is representative of the folder as a representative file from among files stored in the folder; and
   display, along with the list display, attribute information on the selected representative file in association with the folder.
(((2))) The information processing system according to (((1))),
   wherein a display element indicating whether or not the file is the representative file is associated with the files stored in the folder, and
   the processor is configured to:
      switch the representative file in response to a user operation with respect to the display element.
(((3))) The information processing system according to (((1))) or (((2))), wherein the processor is configured to:
   in a case where processing in which display details of the list display are subject to change is executed by referring to attribute information on the file and the folder that are list-displayed, refer to the attribute information on the representative file of the folder in addition to the attribute information on the folder or instead of the attribute information on the folder.
(((4))) The information processing system according to (((3))), wherein the processor is configured to:
   in a case where the processing in which the display details of the list display are subject to change is processing of extracting a folder that meets a predetermined extraction condition and displaying the folder, and at least one of attribute information on the folder or attribute information on a representative file of the folder meets the extraction condition, display the folder and the representative file of the folder as a pair.
(((5))) The information processing system according to any one of (((1))) to (((4))), wherein the processor is configured to:
   in a case where attribute information on the folder and the attribute information on the representative file of the folder are different, update one attribute information so that both the attribute information on the folder and the attribute information on the representative file of the folder match each other.
(((6))) The information processing system according to (((5))), wherein the processor is configured to:
   update attribute information on one or a plurality of files included in the folder to match the attribute information on the folder.
(((7))) The information processing system according to (((5))), wherein the processor is configured to:
   update the attribute information on the folder to match the attribute information on the representative file.
(((8))) The information processing system according to (((5))), wherein the processor is configured to:
   prompt a user to select attribute information that is a match target.
(((9))) The information processing system according to any one of (((1))) to (((8))), wherein the processor is configured to:
   in a case where selection of the file in the list display is received, display details of the file; and
   in a case where the attribute information on the representative file displayed along with the folder or the list display is selected, display details of the representative file of the folder.
(((10))) A program for causing a computer to realize:
   a function of, in a case where list display of a file and a folder stored in an identical hierarchy is executed, selecting a file that is representative of the folder as a representative file from among files stored in the folder; and
   a function of displaying, along with the list display, attribute information on the selected representative file in association with the folder.

According to the exemplary embodiment of the invention described in (((1))), the file stored in the folder may be recognized along with the file in the identical hierarchy to the folder without opening the folder.

According to the exemplary embodiment of the invention described in (((2))), the representative file may be selected by the user.

According to the exemplary embodiment of the invention described in (((3))), the display details of the list display may be changed by referring to the attribute information on the representative file.

According to the exemplary embodiment of the invention described in (((4))), the folder and the representative file may be displayed while maintaining a relationship between the folder and the representative file.

According to the exemplary embodiment of the invention described in (((5))), the attribute information on the folder and the attribute information on the representative file may be made to match.

According to the exemplary embodiment of the invention described in (((6))), the information on the file stored in the folder may be made to match the attribute information on the folder.

According to the exemplary embodiment of the invention described in (((7))), the attribute information on the representative file may be reflected in the attribute information on the folder.

According to the exemplary embodiment of the invention described in (((8))), only the desired attribute information may be made to be the match target.

According to the exemplary embodiment of the invention described in (((9))), the representative file may be used as a display target instead of the folder.

According to the exemplary embodiment of the invention described in (((10))), the file stored in the folder may be recognized along with the file in the identical hierarchy to the folder without opening the folder.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing apparatus
11: user interface (UI) unit
12: file processing unit
13: file management unit
14: display control unit
15: storage unit

## Claims

1. An information processing system comprising:
a processor configured to:
in a case where list display of a file and a folder stored in an identical hierarchy is executed, select a file that is representative of the folder as a representative file from among files stored in the folder; and
display, along with the list display, attribute information on the selected representative file in association with the folder.

2. The information processing system according to claim 1,
wherein a display element indicating whether or not the file is the representative file is associated with the files stored in the folder, and
the processor is configured to:
switch the representative file in response to a user operation with respect to the display element.

3. The information processing system according to claim 1 or 2, wherein the processor is configured to:
in a case where processing in which display details of the list display are subject to change is executed by referring to attribute information on the file and the folder that are list-displayed, refer to the attribute information on the representative file of the folder in addition to the attribute information on the folder or instead of the attribute information on the folder.

4. The information processing system according to claim 3, wherein the processor is configured to:
in a case where the processing in which the display details of the list display are subject to change is processing of extracting a folder that meets a predetermined extraction condition and displaying the folder, and at least one of attribute information on the folder or attribute information on a representative file of the folder meets the extraction condition, display the folder and the representative file of the folder as a pair.

5. The information processing system according to any one of claims 1 to 4, wherein the processor is configured to:
in a case where attribute information on the folder and the attribute information on the representative file of the folder are different, update one attribute information so that both the attribute information on the folder and the attribute information on the representative file of the folder match each other.

6. The information processing system according to claim 5, wherein the processor is configured to:
update attribute information on one or a plurality of files included in the folder to match the attribute information on the folder.

7. The information processing system according to claim 5, wherein the processor is configured to:
update the attribute information on the folder to match the attribute information on the representative file.

8. The information processing system according to claim 5, wherein the processor is configured to:
prompt a user to select attribute information that is a match target.

9. The information processing system according to any one of claims 1 to 8, wherein the processor is configured to:
in a case where selection of the file in the list display is received, display details of the file; and
in a case where the attribute information on the representative file displayed along with the folder or the list display is selected, display details of the representative file of the folder.

10. A program for causing a computer to realize:
a function of, in a case where list display of a file and a folder stored in an identical hierarchy is executed, selecting a file that is representative of the folder as a representative file from among files stored in the folder; and
a function of displaying, along with the list display, attribute information on the selected representative file in association with the folder.

11. An information processing method comprising:
selecting, in a case where list display of a file and a folder stored in an identical hierarchy is executed, a file that is representative of the folder as a representative file from among files stored in the folder; and
displaying, along with the list display, attribute information on the selected representative file in association with the folder.
